(19) Europäisches Patentamt
European Patent Office
Office européen des brevets

(11) **EP 3 373 157 A1**

(12) **EUROPEAN PATENT APPLICATION**
published in accordance with Art. 153(4) EPC

(43) Date of publication:
**12.09.2018 Bulletin 2018/37**

(21) Application number: **16867814.2**

(22) Date of filing: **29.09.2016**

(51) Int Cl.:
*G06F 17/30* (2006.01)

(86) International application number:
**PCT/CN2016/100835**

(87) International publication number:
**WO 2017/088587 (01.06.2017 Gazette 2017/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.11.2015 CN 201510824545**

(71) Applicant: **Huawei Technologies Co., Ltd.**
**Longgang District**
**Shenzhen, Guangdong 518129 (CN)**

(72) Inventors:
• **CHEN, Qingyu**
**Shenzhen**
**Guangdong 518129 (CN)**
• **TAN, Weiguo**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA PROCESSING METHOD AND DEVICE**

(57)     Embodiments of the present invention provide a data processing method. A data processing apparatus obtains a first dataset, and determines a change of a data feature of the first dataset relative to a data feature of a second dataset, where the second dataset is a dataset that is received before the data processing apparatus obtains the first dataset; determines a hyperparameter according to the data feature of the first dataset when the change of the data feature of the first dataset relative to the data feature of the second dataset is greater than or equal to a preset data feature threshold; determines a first data model according to the determined hyperparameter and the first dataset; and processes data according to the determined first data model, to improve efficiency of determining the first data model, thereby improving efficiency of processing data.

*200*

A computer device obtains a first dataset, and determines a data feature of the first dataset — S201

The computer device determines a data feature of a second dataset according to the second dataset, where the second dataset is a dataset that is received before the computer device obtains the first dataset — S202

The computer device determines a change of the data feature of the first dataset relative to the data feature of the second dataset — S203

The computer device determines a hyperparameter according to the data feature of the first dataset when the change of the data feature of the first dataset relative to the data feature of the second dataset is greater than or equal to a preset data feature threshold — S204

The computer device determines a first data model according to the determined hyperparameter and the first dataset — S205

The computer device processes data according to the determined first data model — S206

FIG. 2

EP 3 373 157 A1

**Description**

This application claims priority to Chinese Patent Application No. 201510824545.9, filed with the Chinese Patent Office on November 24, 2015 and entitled "DATA PROCESSING METHOD AND APPARATUS", which is incorporated by reference in its entirety.

**TECHNICAL FIELD**

The present invention relates to the computer field, and in particular, to a data processing method and apparatus.

**BACKGROUND**

Data mining is one step of knowledge discovery in databases (Knowledge Discovery in Databases, KDD), and valuable information is extracted by searching for a hidden relationship from massive data. A general procedure of the data mining includes business understanding, data understanding, data preparation, hyperparameter (Hyperparameter) setting, modeling, model evaluation, and model deployment. The hyperparameter needs to be used in the modeling. A random forest algorithm may be used for the modeling. A random forest is a supervised ensemble learning technology for classification. A model of the technology includes a group of decision tree classifiers. In data classification by using the model, a final result is determined by performing class voting for a classification result of an individual decision tree. The technology combines the Bagging ensemble learning theory developed by Leo Breiman and the random subspace method proposed by Ho. Randomness is added to training pattern space and attribute space to fully ensure independence and a difference between decision trees, so that an overfitting problem of the decision trees is adequately resolved, and desirable robustness (Robust) against noise and an outlier is obtained.

The data mining technology mainly develops in two directions. One direction is to perform modeling analysis on static data, and the other direction is to perform incremental modeling analysis on changing data. In the incremental modeling analysis, when there is a new dataset, an originally created model needs to be updated to ensure that the updated model can reflect information about the new dataset. The incremental modeling analysis is used to process a changing dataset. For different datasets, hyperparameters required for modeling may be different. Therefore, after the originally created model is updated by using the new dataset, to prevent a model effect of the updated model from degrading, a hyperparameter used for creating the original model needs to be adjusted. However, when data keeps changing, currently, adjustment of a hyperparameter relies on expert experience, and an expert needs to adjust the hyperparameter according to a model effect, resulting in low efficiency, causing low efficiency of processing data.

**SUMMARY**

Embodiments of the present invention provide a data processing method and apparatus, to resolve a problem of low efficiency of data processing due to low efficiency of hyperparameter adjustment because hyperparameter adjustment relies on expert experience when data keeps changing.

According to a first aspect, a data processing method is provided, including a process of processing a received dataset by a data processing apparatus by using a first data model, where the first data model is determined according to a hyperparameter, and the method includes the following steps:

obtaining, by the data processing apparatus, a first dataset, and determining a change of a data feature of the first dataset relative to a data feature of a second dataset, where the second dataset is a dataset that is received before the data processing apparatus obtains the first dataset;
determining the hyperparameter according to the data feature of the first dataset when the change of the data feature of the first dataset relative to the data feature of the second dataset is greater than or equal to a preset data feature threshold;
determining the first data model according to the determined hyperparameter and the first dataset; and
processing data according to the determined first data model.

With reference to the first aspect, in a first possible implementation of the first aspect, the method further includes: a second data model, and determining an effect of the second data model according to the first dataset; determining a third data model according to the first dataset and the second data model; determining an effect of the third data model according to the first dataset; determining a change of the effect of the third data model relative to the effect of the second data model; and determining the hyperparameter according to the data feature of the first dataset when the change of the effect of the third data model relative to the effect of the second data model is greater than or equal to a preset model effect threshold.

With reference to the first aspect or the first possible implementation of the first aspect, in a second possible implementation, the method further includes a window length, and the window length is an integer greater than or equal to 1.

With reference to the first aspect, or the first to the second possible implementations of the first aspect, in a third possible implementation, before the determining a change of a data feature of the first dataset relative to a data feature of a second dataset, the method further includes:

determining the second dataset according to the window length;
when the window length is greater than 1, determining the data feature of the second dataset includes:

determining a data feature of each second dataset;
the determining a change of a data feature of the first dataset relative to a data feature of a second dataset includes:

determining a change of the data feature of the first dataset relative to the data feature of each second dataset; and
the determining the hyperparameter according to the data feature of the first dataset when the change of the data feature of the first dataset relative to the data feature of the second dataset is greater than or equal to a preset data feature threshold includes:
determining the hyperparameter according to the data feature of the first dataset when a change of the data feature of the first dataset relative to a data feature of at least one second dataset is greater than or equal to the preset data feature threshold.

With reference to the first aspect, or the first to the third possible implementations of the first aspect, in a fourth possible implementation, before the determining an effect of the second data model according to the first dataset, the method further includes:

determining the second data model according to the window length;
when the window length is greater than 1, the determining an effect of the second data model according to the first dataset includes:

determining an effect of each second data model according to the first dataset;
the determining a change of the effect of the third data model relative to the effect of the second data model includes:

determining a change of the effect of the third data model relative to the effect of each second data model; and
the determining the hyperparameter according to the data feature of the first dataset when the change of the effect of the third data model relative to the effect of the second data model is greater than or equal to a preset model effect threshold includes:
determining the hyperparameter according to the data feature of the first dataset when a change of the effect of the third data model relative to an effect of at least one second data model is greater than or equal to the preset model effect threshold.

With reference to the first aspect, or the first to the fourth possible implementations of the first aspect, in a fifth possible implementation, the method further includes a hyperparameter model, and the determining the hyperparameter according to the data feature of the first dataset includes:
determining the hyperparameter according to the data feature of the first dataset and the hyperparameter model.

With reference to the first aspect, or the first to the fifth possible implementations of the first aspect, in a sixth possible implementation, the first data model is further determined according to the second data model.

With reference to the first aspect, or the first to the sixth possible implementations of the first aspect, in a seventh possible implementation, the data feature includes at least one of a quantity of patterns, a logarithm of a quantity of patterns, a quantity of features, a logarithm of a quantity of features, a quantity of classes, a quantity of patterns with missing values, a percentage of patterns with missing values, a quantity of features with missing values, a percentage of features with missing values, a quantity of missing values, a percentage of missing values, a quantity of numerical features, a quantity of categorical features, a ratio of a quantity of numerical features to a quantity of categorical features, a ratio of a quantity of categorical features to a quantity of numerical features, a dataset dimensionality, a logarithm of a dataset dimensionality, an inverse dataset dimensionality, a logarithm of an inverse dataset dimensionality, a class probability minimum, a class probability maximum, a class probability mean, a class probability standard deviation, a minimum count of categorical values, a maximum count of categorical values, a mean count of categorical values, a standard deviation of a count of categorical values, a total count of categorical values, a kurtosis minimum of all features, a kurtosis maximum of all features, a kurtosis mean of all features, a kurtosis standard deviation of all features, a skewness minimum of all features, a skewness maximum of all features, a skewness mean of all features, a skewness standard deviation of all features, a standard deviation ratio, a mean of pairwise correlation coefficients of all features, a class entropy mean, or a feature entropy mean.

According to a second aspect, a data processing apparatus is provided, where the data processing apparatus processes a received dataset by using a first data model, and the first data model is determined according to a hyperparameter; and the data processing apparatus includes an obtaining module and a processing module, where

the obtaining module is configured to: obtain a first dataset, and determine a change of a data feature of the first dataset relative to a data feature of a second dataset, where the second dataset is a dataset that is received before the data processing apparatus obtains the first dataset;

the processing module is configured to determine the hyperparameter according to the data feature of the first dataset when the change of the data feature of the first dataset relative to the data feature of the second dataset is greater than or equal to a preset data feature threshold;

the processing module is further configured to determine the first data model according to the determined hyperparameter and the first dataset; and

the processing module is further configured to process data according to the determined first data model.

With reference to the second aspect, in a first possible implementation of the second aspect, a second data model is further included, and the processing module is further configured to: determine an effect of the second data model according to the first dataset; determine a third data model according to the first dataset and the second data model; determine an effect of the third data model according to the first dataset; determine a change of the effect of the third data model relative to the effect of the second data model; and determine the hyperparameter according to the data feature of the first dataset when the change of the effect of the third data model relative to the effect of the second data model is greater than or equal to a preset model effect threshold.

With reference to the second aspect or the first possible implementation of the second aspect, in a second possible implementation, a window length is further included, and the window length is an integer greater than or equal to 1.

With reference to the second aspect, or the first to the second possible implementations of the second aspect, in a third possible implementation, before the determining a change of a data feature of the first dataset relative to a data feature of a second dataset, the processing module is further configured to:

determine the second dataset according to the window length;
when the window length is greater than 1, determining the data feature of the second dataset includes:

determining a data feature of each second dataset;
the determining a change of a data feature of the first dataset relative to a data feature of a second dataset includes:

determining a change of the data feature of the first dataset relative to the data feature of each second dataset; and
the determining the hyperparameter according to the data feature of the first dataset when the change of the data feature of the first dataset relative to the data feature of the second dataset is greater than or equal to a preset data feature threshold includes:
determining the hyperparameter according to the data feature of the first dataset when a change of the data feature of the first dataset relative to a data feature of at least one second dataset is greater than or equal to the preset data feature threshold.

With reference to the second aspect, or the first to the third possible implementations of the second aspect, in a fourth possible implementation, before the determining an effect of the second data model according to the first dataset, the processing module is further configured to:

determine the second data model according to the window length;
when the window length is greater than 1, the determining an effect of the second data model according to the first dataset includes:

determining an effect of each second data model according to the first dataset;
the determining a change of the effect of the third data model relative to the effect of the second data model includes:

determining a change of the effect of the third data model relative to the effect of each second data model; and
the determining the hyperparameter according to the data feature of the first dataset when the change of the effect of the third data model relative to the effect of the second data model is greater than or equal to a preset model effect threshold includes:
determining the hyperparameter according to the data feature of the first dataset when a change of the effect of the third data model relative to an effect of at least one second data model is greater than or equal to the preset model effect threshold.

With reference to the second aspect, or the first to the fourth possible implementations of the second aspect, in a fifth possible implementation, a hyperparameter model is further included, and the determining the hyperparameter according to the data feature of the first dataset includes:
determining the hyperparameter according to the data feature of the first dataset and the hyperparameter model.

With reference to the second aspect, or the first to the fifth possible implementations of the second aspect, in a sixth possible implementation, the first data model is further determined according to the second data model.

With reference to the second aspect, or the first to the sixth possible implementations of the second aspect, in a seventh possible implementation, the data feature includes at least one of a quantity of patterns, a logarithm of a quantity of patterns, a quantity of features, a logarithm of a quantity of features, a quantity of classes, a quantity of patterns with missing values, a percentage of patterns with missing values, a quantity of features with missing values, a percentage of features with missing values, a quantity of missing values, a percentage of missing values, a quantity of numerical features, a quantity of categorical features, a ratio of a quantity of numerical features to a quantity of categorical features, a ratio of a quantity of categorical features to a quantity of numerical features, a dataset dimensionality, a logarithm of a dataset dimensionality, an inverse dataset dimensionality, a logarithm of an inverse dataset dimensionality, a class probability minimum, a class probability maximum, a class probability mean, a class probability standard deviation, a minimum count of categorical values, a maximum count of categorical values, a mean count of categorical values, a standard deviation of a count of categorical values, a total count of categorical values, a kurtosis minimum of all features, a kurtosis maximum of all features, a kurtosis mean of all features, a kurtosis standard deviation of all features, a skewness minimum of all features, a skewness maximum of all features, a skewness mean of all features, a skewness standard deviation of all features, a standard deviation ratio, a mean of pairwise correlation coefficients of all features, a class entropy mean, or a feature entropy mean.

According to the technical solutions provided in the embodiments of the present invention, a data processing apparatus obtains a first dataset, and determines a change of a data feature of the first dataset relative to a data feature of a second dataset, where the second dataset is a dataset that is received before the data processing apparatus obtains the first dataset; determines a hyperparameter according to the data feature of the first dataset when the change of the data feature of the first dataset relative to the data feature of the second dataset is greater than or equal to a preset data feature threshold; determines a first data model according to the determined hyperparameter and the first dataset; and processes data according to the determined first data model, to improve efficiency of determining the first data model, thereby improving efficiency of processing data.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic structural diagram of hardware of a computer device 100 according to an embodiment of the present invention;
FIG. 2 is an example of a flowchart of a data processing method 200 according to an embodiment of the present invention; and
FIG. 3 is a schematic structural diagram of a data processing apparatus 300 according to an embodiment of the present invention.

**DESCRIPTION OF EMBODIMENTS**

In the following description, to illustrate rather than limit, specific details such as a particular system structure, an interface, and a technology are provided to make a thorough understanding of the present invention. However, a person skilled in the art should know that the present invention may be implemented in other embodiments without these specific details. In other cases, detailed descriptions of well-known apparatuses, circuits, and methods are omitted, so that the present invention is described without being obscured by unnecessary details.

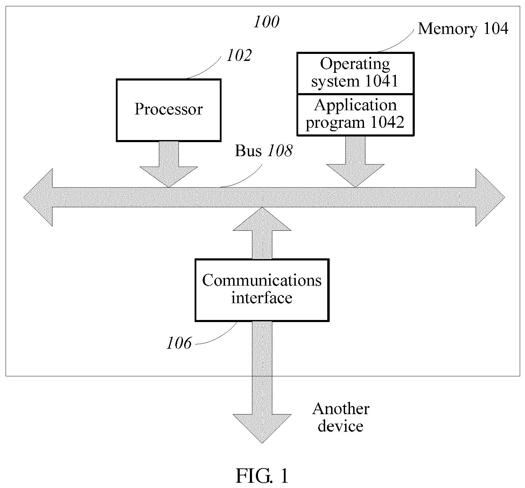

FIG. 1 is a schematic structural diagram of hardware of a computer device 100 according to an embodiment of the present invention. As shown in FIG. 1, the computer device 100 includes a processor 102, a memory 104, a communications interface 106, and a bus 108. The processor 102, the memory 104, and the communications interface 106 are in communication connection to each other by using the bus 108.

The processor 102 may be a general-purpose central processing unit (Central Processing Unit, CPU), a microprocessor, an application-specific integrated circuit (Application Specific Integrated Circuit, ASIC), or one or more integrated circuits, and is configured to execute a related program to implement the technical solution provided in this embodiment of the present invention.

The memory 104 may be a read-only memory (Read Only Memory, ROM), a static storage device, a dynamic storage device, or a random access memory (Random Access Memory, RAM). The memory 104 may store an operating system 1041 and another application program 1042. When the technical solution provided in this embodiment of the present invention is implemented by using software or firmware, program code for implementing the technical solution provided in this embodiment of the present invention is stored in the memory 104 and is executed by the processor 102.

For the communications interface 106, a transceiver apparatus is used to implement communication between the communications interface and another device or communications network. The transceiver apparatus is, for example, but is not limited to, a transceiver.

The bus 108 may include a channel, through which information is transmitted between parts (for example, the processor 102, the memory 104, and the communications interface 106).

The computer device 100 may be a general-purpose computer device or a special-purpose computer device. During actual application, the computer device 100 may be a desktop computer, a portable computer, a network server, a personal digital assistant (PDA), a mobile phone, a tablet computer, a wireless terminal device, a telecommunications device, an embedded system, or another device with a structure similar to that in FIG. 1.

The processor 102 is configured to: obtain a first dataset, and determine a change of a data feature of the first dataset relative to a data feature of a second dataset, where the second dataset is a dataset that is received before the data processing apparatus obtains the first dataset; determine a hyperparameter according to the data feature of the first dataset when the change of the data feature of the first dataset relative to the data feature of the second dataset is greater than or equal to a preset data feature threshold; determine a first data model according to the determined hyperparameter and the first dataset; and process data according to the determined first data model.

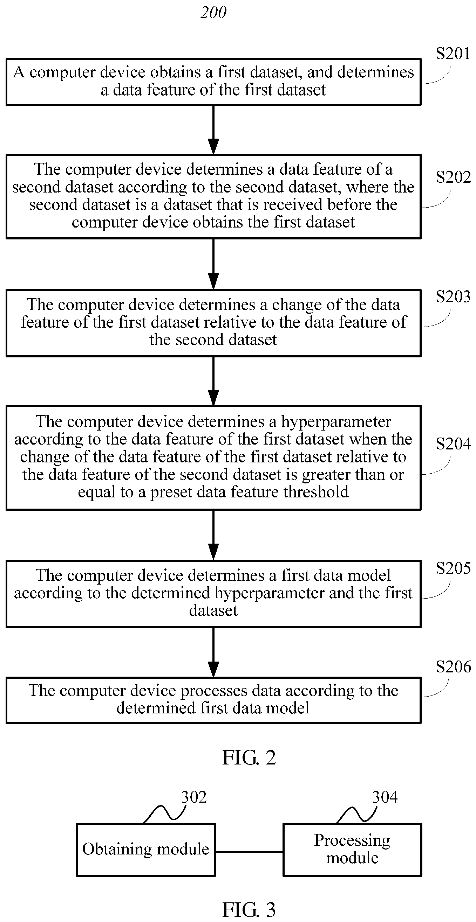

FIG. 2 is an example of a flowchart of a data processing method 200 according to an embodiment of the present invention. In a specific implementation process, the data processing method 200 may be performed by, for example, but not limited to, a computer device 100.

S201. The computer device obtains a first dataset, and determines a data feature of the first dataset.

In an implementation of this embodiment of the present invention, the first dataset may be obtained by receiving a data flow, or may be obtained by reading a database.

In an implementation of this embodiment of the present invention, the data feature includes at least one of a quantity of patterns (number of patterns), a logarithm of a quantity of patterns (log number of patterns), a quantity of features (number of features), a logarithm of a quantity of features (log number of features), a quantity of classes (number of classes), a quantity of patterns with missing values (number of patterns with missing values), a percentage of patterns with missing values (percentage of patterns with missing values), a quantity of features with missing values (number of features with missing values), a percentage of features with missing values (percentage of features with missing values), a quantity of missing values (number of missing values), a percentage of missing values (percentage of missing values), a quantity of numerical features (number of numerical features), a quantity of categorical features (number of categorical features), a ratio of a quantity of numerical features to a quantity of categorical features (ratio numerical to categorical), a ratio of a quantity of categorical features to a quantity of numerical features (ratio categorical to numerical), a dataset dimensionality (dataset dimensionality), a logarithm of a dataset dimensionality (log a dataset dimensionality), an inverse dataset dimensionality (inverse dataset dimensionality), a logarithm of an inverse dataset dimensionality (log inverse dataset dimensionality), a class probability minimum (class probability minimum), a class probability maximum (class probability maximum), a class probability mean (class probability mean), a class probability standard deviation (class probability Standard Deviation), a minimum count of categorical values (minimum count of categorical values), a maximum count of categorical values (maximum count of categorical values), a mean count of categorical values (mean count of categorical values), a standard deviation of a count of categorical values (Standard Deviation of count of categorical values), a total count of categorical values (total count of categorical values), a kurtosis minimum (kurtosis minimum) of all features, a kurtosis maximum (kurtosis maximum) of all features, a kurtosis mean (kurtosis mean) of all features, a kurtosis standard deviation (kurtosis Standard Deviation) of all features, a skewness minimum (skewness minimum) of all features, a skewness maximum (skewness maximum) of all features, a skewness mean (skewness mean) of all features, a skewness standard deviation (skewness Standard Deviation) of all features, a standard deviation ratio (standard deviation ratio), a mean of pairwise correlation coefficients of all features, a class entropy mean (class entropy mean), or a feature entropy mean (features entropy mean).

For example, the first dataset is data about application recommendation.

**Table 1 Examples of the first dataset**

| No. | ID | Traffic package | Application type | Application name | Like it or not |
|-----|-----|-----|-----|-----|-----|
| 1 | 13800138002 | 300 M | Communications | EasyChat | 1 |
| 2 | 13800138002 | 150 M | Video | Youku | 0 |
| 3 | 13800138003 | 5100 M | Video | Youku | 0 |
| 4 | 13800138004 | 1 G | Travelling | Didi Dache | 1 |
| 5 | 13800138004 | 2 G | Communications | EasyChat | 1 |
| 6 | 13800138005 | 800 M | Social | WeChat | 1 |
| ... | ... | ... | ... | ... | ... |
| 100 | 13800138065 | 500 M | Communications | EasyChat | 1 |

For example, by collecting statistics on three data feature elements, that is, a quantity of patterns, a quantity of classes, and a class entropy mean, of the first dataset in Table 1, it may be learned that the data feature of the first dataset is:

| Quantity of patterns | Quantity of classes | Class entropy mean |
|-----|-----|-----|
| 100 | 2 | 0.1 |

For the first dataset shown in Table 1, each row of data is a pattern, and the quantity of patterns is 100. The quantity of classes is a quantity of value types in the last column "Like it or not". In this example, there are two types of values, that is, "1" and "0" in the column "Like it or not", and the quantity of classes is 2. The class entropy mean may be calculated by using a formula $Ha = \frac{1}{m}\sum_{j}^{m}(-\pi_j \log_2 \pi_j)$, where m represents the quantity of classes, j is a positive integer less than or equal to m, and $\pi_j$ represents a percentage of a quantity of patterns of each class in a total quantity of patterns. The quantity of classes in the foregoing statistics is 2, and therefore m=2 herein. $\pi_1$ = (quantity of patterns with the type 1)/quantity of patterns. $\pi_2$ = (quantity of patterns with the type 0)/quantity of patterns. $C_1$ is used to represent the quantity of patterns with the type 1, and $C_2$ is used to represent the quantity of patterns with the type 0. Therefore, $\pi_1 = C_1/(C_1+C_2)$, and $\pi_2 = C_2/(C_1 + C_2)$. Eventually,

$$Ha = \frac{1}{m}\sum_{j}^{m}(-\pi_j \log_2 \pi_j) = -1/2*(\pi_1 * \log_2 \pi_1 + \pi_2 * \log_2 \pi_2) = -1/2*[C_1/(C_1+C_2)*$$

$\log_2[C_1/(C_1+C_2)]+C_2/(C_1+C_2)*\log_2[C_2/(C_1+C_2)])$. It is assumed that the class entropy mean that is of the first dataset and that is obtained by means of calculation in Table 1 is 0.1.

S202. The computer device determines a data feature of a second dataset according to the second dataset, where the second dataset is a dataset that is received before the computer device obtains the first dataset.
S203. The computer device determines a change of the data feature of the first dataset relative to the data feature of the second dataset.

In an implementation of this embodiment of the present invention, a data feature may be used as a vector, and a change of the vector is determined by calculating a distance or a cosine similarity between vectors, to determine the change of the data feature of the first dataset relative to the data feature of the second dataset.
For example, it is assumed that determined data feature elements of the second dataset are:

| Quantity of patterns | Quantity of classes | Class entropy mean |
|---|---|---|
| 200 | 2 | 0.2 |

Data feature elements of the first dataset are:

| Quantity of patterns | Quantity of classes | Class entropy mean |
|---|---|---|
| 100 | 2 | 0.1 |

A cosine similarity calculation formula is $\cos\theta = \dfrac{a*b}{\|a\|*\|b\|}$, where a symbol "$\|\ \|$" represents a modulo operation. A cosine similarity that is between the data feature of the first dataset and the data feature of the second dataset and that is calculated according to the cosine similarity calculation formula is

$$\frac{100*200+2*2+0.1*0.2}{\sqrt{100*100+2*2+0.1*0.1}*\sqrt{200*200+2*2+0.2*0.2}} = 0.99995.$$

If P is used to represent a cosine similarity between the data feature of the first dataset and the data feature of the first dataset itself, and Q is used to represent the cosine similarity between the data feature of the first dataset and the data feature of the second dataset, P - Q may be used to represent the change of the data feature of the first dataset relative to the data feature of the second dataset. Because the cosine similarity between the data feature of the first dataset and the data feature of the first dataset itself is 1, the change of the data feature of the first dataset relative to the data feature of the second dataset may be represented as 1 - 0.99995=0.00005.

S204. The computer device determines a hyperparameter according to the data feature of the first dataset when the change of the data feature of the first dataset relative to the data feature of the second dataset is greater than or equal to a preset data feature threshold.

For example, the preset data feature threshold is 0.00001. When the change of the data feature of the first dataset relative to the data feature of the second dataset is 0.00005 and is greater than the preset data feature threshold 0.00001, the computer device determines the hyperparameter according to the data feature of the first dataset.

In an implementation of this embodiment of the present invention, the data processing method 200 further includes a hyperparameter model. The determining a hyperparameter according to the data feature of the first dataset includes: determining the hyperparameter according to the data feature of the first dataset and the hyperparameter model.

In an implementation of this embodiment of the present invention, a manner of creating the hyperparameter model may include: creating the hyperparameter model according to a data feature of a dataset used to update the model each time and a corresponding hyperparameter. For example, when a random forest algorithm is used to create a hyperparameter model, it is assumed that there are two hyperparameters: a quantity m of trees and a depth n of a tree. The computer device stores a data feature of a dataset used to update the model each time and a corresponding hyperparameter, as shown in Table 2.

**Table 2 Data features of datasets and corresponding hyperparameters**

| Quantity of patterns | Quantity of classes | Class entropy mean | Quantity m of trees | Depth n of a tree |
|---|---|---|---|---|
| 100000 | 2 | 0.14 | 1000 | 1 |
| 10000 | 2 | 0.3 | 300 | 2 |
| 21011 | 2 | 0.2 | 400 | 3 |
| ... | ... | ... | ... | ... |

A data feature of a dataset is used as an eigenvalue for creating a hyperparameter model, a hyperparameter is a target value for creating the hyperparameter model, and the hyperparameter model may be created by using the random forest algorithm. Hyperparameter models with target values being the quantity m of trees and the depth n of a tree may be separately created. After the hyperparameter model is created, the hyperparameter model is applied to the

8

data feature of the first dataset, and a value range of the hyperparameter corresponding to the data feature of the first dataset may be obtained.

After the value range of the hyperparameter corresponding to the data feature of the first dataset is obtained, in an implementation of this embodiment of the present invention, an optimal hyperparameter may be determined in the value range of the hyperparameter by using a dichotomous search method. The optimal hyperparameter is a hyperparameter that is within the determined value range of the hyperparameter and that is used to obtain an optimal effect of improving a data model. The data model is determined according to the dataset.

In a process of determining the optimal hyperparameter, by using the dichotomous search method, during each search, the value range of the hyperparameter is divided into two equal halves, and a search is performed only in one half of the value range that is used to obtain a better effect of improving a data model. For example, it is assumed that an obtained value range of a quantity of hyperparameter trees is {8, 9, 10, 11, 12}, effects of the data model are separately obtained when m=8 and m=12. An effect of the data model is also obtained when an intermediate value m=(8+12)/2=10. If an effect of the data model between 8 at the left end and the intermediate value 10 is better than an effect of the data model between the intermediate value 10 and 12 at the right end, the value range of the quantity m of hyperparameter trees is reduced to {8, 9, 10}, or if an effect of the data model between 8 at the left end and the intermediate value 10 is not better than an effect of the data model between the intermediate value 10 and 12 at the right end, the value range of the quantity m of hyperparameter trees is reduced to {10, 11, 12}. The process is repeated, until the optimal hyperparameter is determined.

Because the value range that is of the hyperparameter and that is determined by using the hyperparameter model is relatively small, when the dichotomous search method is used, fewer searches need to be performed to determine the optimal hyperparameter.

In an implementation of this embodiment of the present invention, in S204, the data processing method 200 further includes: a second data model, and determining an effect of the second data model according to the first dataset; determining a third data model according to the first dataset and the second data model; determining an effect of the third data model according to the first dataset; determining a change of the effect of the third data model relative to the effect of the second data model; and determining the hyperparameter according to the data feature of the first dataset when the change of the effect of the third data model relative to the effect of the second data model is greater than or equal to a preset model effect threshold.

For example, the first dataset is data about application recommendation shown in Table 1. A predicated value representing "Like it or not" may be obtained according to the column "ID", the column "Traffic package", the column "Application type", and the column "Application name" in Table 1 and a first data model. Statistics are collected on a quantity H of patterns having consistent predicated values and target values according to the predicated value and the column "Like it or not" used as the target value in Table 1. An accuracy rate of the predicated value may be obtained by dividing H by the quantity 100 of patterns in the first dataset, to reflect an effect of the data model. It is assumed that the quantity H of patterns that is obtained by collecting statistics is 73, an effect A1 that is of the second data model and that is obtained according to the dataset in Table 1 is 0.73.

A hyperparameter for creating the second data model is further used when the third data model is determined according to the first dataset and the second data model. For example, it is assumed that the created second data model is a random forest model, and two hyperparameters for creating the second data model are separately the quantity m=5 of trees and the depth n=2 of a tree. When the third data model is determined according to the second data model and the first dataset in Table 1, the column "ID", the column "Traffic package", the column "Application type", and the column "Application name" are used as independent variables, and the column "Like it or not" is used as a dependent variable. The hyperparameters of m=5 and n=2 are used to determine the third data model. Subsequently, a predicated value representing "Like it or not" may be obtained according to the column "ID", the column "Traffic package", the column "Application type", and the column "Application name" in Table 1 and the created third data model. Statistics are collected on a quantity J of patterns having consistent predicated values and target values according to the predicated value and the column "Like it or not" used as the target value in Table 1. An accuracy rate of the predicated value may be obtained by dividing J by the quantity 100 of patterns in the first dataset, to reflect an effect of the data model. It is assumed that the quantity J of patterns that is obtained by collecting statistics is 70, an effect A2 that is of the third data model and that is obtained according to the dataset in Table 1 is 0.70. A change of the effect of the third data model relative to the effect of the second data model may be represented as $\dfrac{|A_2 - A_1|}{A_1} = \dfrac{|0.70 - 0.73|}{0.73} = 4.11\%.$ It is assumed the preset model effect threshold is 1%, and the change of the effect of the third data model relative to the effect of the second data model is greater than the preset model effect threshold. The computer device determines the hyperparameter according to the data feature of the first dataset.

In an implementation of this embodiment of the present invention, the data processing method 200 further includes a window length, and the window length is an integer greater than or equal to 1.

In an implementation of this embodiment of the present invention, in S202 and S204, before the determining a data feature of a second dataset according to the stored second dataset, the data processing method 200 further includes: determining the second dataset according to the window length. When the window length is greater than 1, the determining a data feature of a second dataset includes: determining a data feature of each second dataset. The determining a change of the data feature of the first dataset relative to the data feature of the second dataset includes: determining a change of the data feature of the first dataset relative to the data feature of each second dataset. The determining the hyperparameter according to the data feature of the first dataset when the change of the data feature of the first dataset relative to the data feature of the second dataset is greater than or equal to a preset data feature threshold includes: determining the hyperparameter according to the data feature of the first dataset when a change of the data feature of the first dataset relative to a data feature of at least one second dataset is greater than or equal to the preset data feature threshold.

In an implementation of this embodiment of the present invention, the second dataset that is determined according to the window length is datasets whose quantity are equal to the window length and that are most recently stored in the computer device.

For example, assuming that the window length is 3, three datasets that are most recently stored in the computer device are determined according to the window length. Assuming that the three datasets are datasets D1, D2, and D3, the computer device separately determines data features of the datasets D1, D2, and D3. Cosine similarities between the data feature of the first dataset and the data features of the datasets D1, D2, and D3 may be calculated. Changes of the data feature of the first dataset relative to the data features of the datasets D1, D2, and D3 are determined according to the cosine similarities. It is assumed that the cosine similarities obtained by means of calculation are:

| Cosine similarity between the first dataset and the dataset D1 | Cosine similarity between the first dataset and the dataset D2 | Cosine similarity between the first dataset and the dataset D3 | Cosine similarity between the first dataset and the first dataset itself |
| --- | --- | --- | --- |
| 0.88 | 0.92 | 0.96 | 1.0 |

The changes of the data feature of the first dataset relative to the data features of the datasets D1, D2, and D3 may be represented as:

| Change of the data feature of the first dataset relative to the data feature of the dataset D1 | Change of the data feature of the first dataset relative to the data feature of the dataset D2 | Change of the data feature of the first dataset relative to the data feature of the dataset D3 |
| --- | --- | --- |
| 0.12 | 0.08 | 0.04 |

It is assumed that the preset data feature threshold is 0.10. The change of the data feature of the first dataset relative to the data feature of the dataset D1 is 0.12 and is greater than the preset data feature threshold 0.10. Therefore, the computer device determines the hyperparameter according to the data feature of the first dataset.

Because a data feature sometimes changes slowly, a change of the data feature of the first dataset relative to a data feature of a latest dataset that is stored in the computer device is less than the preset data feature threshold. However, a change of the data feature of the first dataset relative to a data feature of a dataset stored earlier in the computer device reaches the preset data feature threshold. In this case, the hyperparameter needs to be determined again. Therefore, such a slow change of the data feature can be processed by determining changes of data features of datasets whose quantity are equal to the window length, so that the hyperparameter is adjusted in a timelier manner.

In an implementation of this embodiment of the present invention, in S204, before the determining an effect of the second data model according to the first dataset, the data processing method 200 further includes: determining the second data model according to the window length. When the window length is greater than 1, the determining an effect of the second data model according to the first dataset includes: determining an effect of each second data model according to the first dataset. The determining a change of the effect of the third data model relative to the effect of the second data model includes: determining a change of the effect of the third data model relative to the effect of each second data model. The determining the hyperparameter according to the data feature of the first dataset when the change of the effect of the third data model relative to the effect of the second data model is greater than or equal to a preset model effect threshold includes: determining the hyperparameter according to the data feature of the first dataset when a change of the effect of the third data model relative to an effect of at least one second data model is greater than or equal to the preset model effect threshold.

In an implementation of this embodiment of the present invention, the first data model that is determined according to the window length is data models whose quantity are equal to the window length and that are most recently stored in the computer device.

For example, assuming that the window length is 3, three data models that are most recently stored in the computer device are determined according to the window length. Assuming that the three data models are M1, M2, and M3, the computer device separately calculates effects of the data models M1, M2, and M3 according to the first dataset. It is assumed that the effects that are of the data models and that are obtained by means of calculation are:

| Effect A1 of M1 | Effect A2 of M2 | Effect A3 of M3 |
| --- | --- | --- |
| 0.7598 | 0.7596 | 0.7328 |

It is assumed that an effect A of the second data model is 0.7234, changes of the effect of the second data model relative to the effects of the data models M1, M2, and M3 are:

| Change of A relative to A1 | Change of A relative to A2 | Change of A relative to A3 |
| --- | --- | --- |
| 4.79% | 4.77% | 1.28% |

It is assumed the preset model effect threshold is 4.7%. The change of the effect of the second data model relative to the effect of the data model M1 is 4.79%, and the change of the effect of the second data model relative to the effect of the data model M2 is 4.77%. The changes are greater than the preset model effect threshold 4.7%. Therefore, the computer device determines the hyperparameter according to the data feature of the first dataset.

Because an effect of a data model sometimes changes slowly, a change of the effect of the second data model relative to an effect of a latest data model that is stored in the computer device is less than the preset model effect threshold. However, a change of the effect of the second data model relative to an effect of a data model stored earlier in the computer device reaches the preset model effect threshold. In this case, the hyperparameter needs to be determined again. Therefore, such a slow change of the effect of the data model can be processed by determining changes of the effects of data models whose quantity are equal to the window length, so that the hyperparameter is adjusted in a timelier manner.

S205. The computer device determines a first data model according to the determined hyperparameter and the first dataset.

S206. The computer device processes data according to the determined first data model.

In an implementation of this embodiment of the present invention, a process of determining the first data model according to the first dataset and the determined hyperparameter is the same as a process of determining the third data model in S204, and details are not described herein again.

In an implementation of this embodiment of the present invention, the data processing method may be an application recommendation method, and the performing data processing may be performing application recommendation. An application that needs to be recommended may be determined according to the determined first data model and by using user information and application information.

A data processing apparatus obtains a first dataset, and determines a change of a data feature of the first dataset relative to a data feature of a second dataset, where the second dataset is a dataset that is received before the data processing apparatus obtains the first dataset; determines a hyperparameter according to the data feature of the first dataset when the change of the data feature of the first dataset relative to the data feature of the second dataset is greater than or equal to a preset data feature threshold; determines a first data model according to the determined hyperparameter and the first dataset; and processes data according to the determined first data model, to improve efficiency of determining the first data model, thereby improving efficiency of processing data.

FIG. 3 is a schematic structural diagram of a data processing apparatus 300 according to an embodiment of the present invention. The data processing apparatus 300 includes an obtaining module 302 and a processing module 304.

The obtaining module 302 is configured to: obtain a first dataset, and determine a change of a data feature of the first dataset relative to a data feature of a second dataset, where the second dataset is a dataset that is received before the data processing apparatus obtains the first dataset.

The processing module 304 is configured to determine a hyperparameter according to the data feature of the first dataset when the change of the data feature of the first dataset relative to the data feature of the second dataset is greater than or equal to a preset data feature threshold.

The processing module 304 is further configured to determine a first data model according to the determined hyperparameter and the first dataset.

The processing module 304 is further configured to process data according to the determined first data model.

In an implementation of this embodiment of the present invention, a second data model is further included. The processing module 304 is further configured to: determine an effect of the second data model according to the first dataset; determine a third data model according to the first dataset and the second data model; determine an effect of the third data model according to the first dataset; determine a change of the effect of the third data model relative to the effect of the second data model; and determine the hyperparameter according to the data feature of the first dataset when the change of the effect of the third data model relative to the effect of the second data model is greater than or equal to a preset model effect threshold.

In an implementation of this embodiment of the present invention, a window length is further included, and the window length is an integer greater than or equal to 1.

In an implementation of this embodiment of the present invention, before the determining a change of a data feature of the first dataset relative to a data feature of a second dataset, the processing module is further configured to:

determine the second dataset according to the window length;
when the window length is greater than 1, determining the data feature of the second dataset includes:

determining a data feature of each second dataset;
the determining a change of a data feature of the first dataset relative to a data feature of a second dataset includes:

determining a change of the data feature of the first dataset relative to the data feature of each second dataset; and
the determining a hyperparameter according to the data feature of the first dataset when the change of the data feature of the first dataset relative to the data feature of the second dataset is greater than or equal to a preset data feature threshold includes:
determining the hyperparameter according to the data feature of the first dataset when a change of the data feature of the first dataset relative to a data feature of at least one second dataset is greater than or equal to the preset data feature threshold.

In an implementation of this embodiment of the present invention, before the determining an effect of the second data model according to the first dataset, the processing module is further configured to:

determine the second data model according to the window length;
when the window length is greater than 1, the determining an effect of the second data model according to the first dataset includes:

determining an effect of each second data model according to the first dataset;
the determining a change of the effect of the third data model relative to the effect of the second data model includes:

determining a change of the effect of the third data model relative to the effect of each second data model; and
the determining the hyperparameter according to the data feature of the first dataset when the change of the effect of the third data model relative to the effect of the second data model is greater than or equal to a preset model effect threshold includes:
determining the hyperparameter according to the data feature of the first dataset when a change of the effect of the third data model relative to an effect of at least one second data model is greater than or equal to the preset model effect threshold.

In an implementation of this embodiment of the present invention, a hyperparameter model is further included, and the determining the hyperparameter according to the data feature of the first dataset includes:
determining the hyperparameter according to the data feature of the first dataset and the hyperparameter model.

In an implementation of this embodiment of the present invention, the first data model is further determined according to the second data model.

The "module" may be an application-specific integrated circuit (Application Specific Integrated Circuit, ASIC), an electronic circuit, a processor or a memory that executes one or more software or firmware programs, a combinational logic circuit, or another component providing the foregoing functions. In an implementation of this embodiment of the present invention, the data processing apparatus 300 is implemented in a form of a computer device. The obtaining module 302 may be implemented by a processor, a memory, and a communications interface of the computer device. The processing module 304 may be implemented by a processor and a memory of a processing server.

It should be noted that, the computer device 100 shown in FIG. 1 shows only the processor 102, the memory 104, the communications interface 106, and the bus 108. However, in a specific implementation process, a person skilled in the art should understand that the data processing apparatus further includes another component necessary for implementing normal running. Moreover, according to a specific requirement, a person skilled in the art should understand that, the data processing apparatus may further include a hardware component for implementing another additional function. In addition, a person skilled in the art should understand that, the data processing apparatus may also include only components necessary for implementing this embodiment of the present invention, but does not necessarily include all components shown in FIG. 1.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.   A data processing method, comprising a process of processing a received dataset by a data processing apparatus by using a first data model, wherein the first data model is determined according to a hyperparameter; and comprising the following steps:

   obtaining, by the data processing apparatus, a first dataset, and determining a change of a data feature of the first dataset relative to a data feature of a second dataset, wherein the second dataset is a dataset that is received before the data processing apparatus obtains the first dataset;
   determining the hyperparameter according to the data feature of the first dataset when the change of the data feature of the first dataset relative to the data feature of the second dataset is greater than or equal to a preset data feature threshold;
   determining the first data model according to the determined hyperparameter and the first dataset; and
   processing data according to the determined first data model.

2.   The method according to claim 1, wherein the method further comprises: a second data model, and determining an effect of the second data model according to the first dataset; determining a third data model according to the first dataset and the second data model; determining an effect of the third data model according to the first dataset; determining a change of the effect of the third data model relative to the effect of the second data model; and determining the hyperparameter according to the data feature of the first dataset when the change of the effect of the third data model relative to the effect of the second data model is greater than or equal to a preset model effect threshold.

3.   The method according to claim 1 or 2, wherein the method further comprises a window length, and the window length is an integer greater than or equal to 1.

4.   The method according to claim 3, wherein before the determining a change of a data feature of the first dataset relative to a data feature of a second dataset, the method further comprises:

determining the second dataset according to the window length;
when the window length is greater than 1, determining the data feature of the second dataset comprises:

determining a data feature of each second dataset;
the determining a change of a data feature of the first dataset relative to a data feature of a second dataset comprises:

determining a change of the data feature of the first dataset relative to the data feature of each second dataset; and
the determining the hyperparameter according to the data feature of the first dataset when the change of the data feature of the first dataset relative to the data feature of the second dataset is greater than or equal to a preset data feature threshold comprises:
determining the hyperparameter according to the data feature of the first dataset when a change of the data feature of the first dataset relative to a data feature of at least one second dataset is greater than or equal to the preset data feature threshold.

5. The method according to claim 3, wherein before the determining an effect of the second data model according to the first dataset, the method further comprises:

determining the second data model according to the window length;
when the window length is greater than 1, the determining an effect of the second data model according to the first dataset comprises:

determining an effect of each second data model according to the first dataset;
the determining a change of the effect of the third data model relative to the effect of the second data model comprises:

determining a change of the effect of the third data model relative to the effect of each second data model; and
the determining the hyperparameter according to the data feature of the first dataset when the change of the effect of the third data model relative to the effect of the second data model is greater than or equal to a preset model effect threshold comprises:
determining the hyperparameter according to the data feature of the first dataset when a change of the effect of the third data model relative to an effect of at least one second data model is greater than or equal to the preset model effect threshold.

6. The method according to any one of claims 1 to 5, wherein the method further comprises a hyperparameter model, and the determining the hyperparameter according to the data feature of the first dataset comprises:
determining the hyperparameter according to the data feature of the first dataset and the hyperparameter model.

7. The method according to any one of claims 1 to 6, wherein the first data model is further determined according to the second data model.

8. The method according to any one of claims 1 to 7, wherein the data feature comprises at least one of a quantity of patterns, a logarithm of a quantity of patterns, a quantity of features, a logarithm of a quantity of features, a quantity of classes, a quantity of patterns with missing values, a percentage of patterns with missing values, a quantity of features with missing values, a percentage of features with missing values, a quantity of missing values, a percentage of missing values, a quantity of numerical features, a quantity of categorical features, a ratio of a quantity of numerical features to a quantity of categorical features, a ratio of a quantity of categorical features to a quantity of numerical features, a dataset dimensionality, a logarithm of a dataset dimensionality, an inverse dataset dimensionality, a logarithm of an inverse dataset dimensionality, a class probability minimum, a class probability maximum, a class probability mean, a class probability standard deviation, a minimum count of categorical values, a maximum count of categorical values, a mean count of categorical values, a standard deviation of a count of categorical values, a total count of categorical values, a kurtosis minimum of all features, a kurtosis maximum of all features, a kurtosis mean of all features, a kurtosis standard deviation of all features, a skewness minimum of all features, a skewness maximum of all features, a skewness mean of all features, a skewness standard deviation of all features, a standard deviation ratio, a mean of pairwise correlation coefficients of all features, a class entropy mean, or a feature entropy mean.

9. A data processing apparatus, wherein the data processing apparatus processes a received dataset by using a first data model, and the first data model is determined according to a hyperparameter; and the data processing apparatus comprises an obtaining module and a processing module, wherein

the obtaining module is configured to: obtain a first dataset, and determine a change of a data feature of the first dataset relative to a data feature of a second dataset, wherein the second dataset is a dataset that is received before the data processing apparatus obtains the first dataset;

the processing module is configured to determine the hyperparameter according to the data feature of the first dataset when the change of the data feature of the first dataset relative to the data feature of the second dataset is greater than or equal to a preset data feature threshold;

the processing module is further configured to determine the first data model according to the determined hyperparameter and the first dataset; and

the processing module is further configured to process data according to the determined first data model.

10. The apparatus according to claim 9, wherein a second data model is further comprised, and the processing module is further configured to: determine an effect of the second data model according to the first dataset; determine a third data model according to the first dataset and the second data model; determine an effect of the third data model according to the first dataset; determine a change of the effect of the third data model relative to the effect of the second data model; and determine the hyperparameter according to the data feature of the first dataset when the change of the effect of the third data model relative to the effect of the second data model is greater than or equal to a preset model effect threshold.

11. The apparatus according to claim 9 or 10, wherein a window length is further comprised, and the window length is an integer greater than or equal to 1.

12. The apparatus according to claim 11, wherein before the determining a change of a data feature of the first dataset relative to a data feature of a second dataset, the processing module is further configured to:

determine the second dataset according to the window length;
when the window length is greater than 1, determining the data feature of the second dataset comprises:

determining a data feature of each second dataset;
the determining a change of a data feature of the first dataset relative to a data feature of a second dataset comprises:

determining a change of the data feature of the first dataset relative to the data feature of each second dataset; and
the determining the hyperparameter according to the data feature of the first dataset when the change of the data feature of the first dataset relative to the data feature of the second dataset is greater than or equal to a preset data feature threshold comprises:
determining the hyperparameter according to the data feature of the first dataset when a change of the data feature of the first dataset relative to a data feature of at least one second dataset is greater than or equal to the preset data feature threshold.

13. The apparatus according to claim 11, wherein before the determining an effect of the second data model according to the first dataset, the processing module is further configured to:

determine the second data model according to the window length;
when the window length is greater than 1, the determining an effect of the second data model according to the first dataset comprises:

determining an effect of each second data model according to the first dataset;
the determining a change of the effect of the third data model relative to the effect of the second data model comprises:

determining a change of the effect of the third data model relative to the effect of each second data model; and
the determining the hyperparameter according to the data feature of the first dataset when the change of the effect of the third data model relative to the effect of the second data model is greater than or equal to a preset model effect threshold comprises:
determining the hyperparameter according to the data feature of the first dataset when a change of the effect of the third data model relative to an effect of at least one second data model is greater than or equal to the preset model effect threshold.

14. The apparatus according to any one of claims 9 to 13, wherein a hyperparameter model is further comprised, and the determining the hyperparameter according to the data feature of the first dataset comprises:
determining the hyperparameter according to the data feature of the first dataset and the hyperparameter model.

15. The apparatus according to any one of claims 9 to 14, wherein the first data model is further determined according to the second data model.

16. The apparatus according to any one of claims 9 to 15, wherein the data feature comprises at least one of a quantity of patterns, a logarithm of a quantity of patterns, a quantity of features, a logarithm of a quantity of features, a quantity of classes, a quantity of patterns with missing values, a percentage of patterns with missing values, a quantity of features with missing values, a percentage of features with missing values, a quantity of missing values, a percentage of missing values, a quantity of numerical features, a quantity of categorical features, a ratio of a quantity of numerical features to a quantity of categorical features, a ratio of a quantity of categorical features to a quantity of numerical features, a dataset dimensionality, a logarithm of a dataset dimensionality, an inverse dataset dimensionality, a logarithm of an inverse dataset dimensionality, a class probability minimum, a class probability maximum, a class probability mean, a class probability standard deviation, a minimum count of categorical values, a maximum count of categorical values, a mean count of categorical values, a standard deviation of a count of categorical values, a total count of categorical values, a kurtosis minimum of all features, a kurtosis maximum of all features, a kurtosis mean of all features, a kurtosis standard deviation of all features, a skewness minimum of all features, a skewness maximum of all features, a skewness mean of all features, a skewness standard deviation of all features, a standard deviation ratio, a mean of pairwise correlation coefficients of all features, a class entropy mean, or a feature entropy mean.

FIG. 1

*200*

| |
|---|
| A computer device obtains a first dataset, and determines a data feature of the first dataset | S201 |

↓

| |
|---|
| The computer device determines a data feature of a second dataset according to the second dataset, where the second dataset is a dataset that is received before the computer device obtains the first dataset | S202 |

↓

| |
|---|
| The computer device determines a change of the data feature of the first dataset relative to the data feature of the second dataset | S203 |

↓

| |
|---|
| The computer device determines a hyperparameter according to the data feature of the first dataset when the change of the data feature of the first dataset relative to the data feature of the second dataset is greater than or equal to a preset data feature threshold | S204 |

↓

| |
|---|
| The computer device determines a first data model according to the determined hyperparameter and the first dataset | S205 |

↓

| |
|---|
| The computer device processes data according to the determined first data model | S206 |

FIG. 2

302              304

| Obtaining module |———| Processing module |
|---|---|---|

FIG. 3

# INTERNATIONAL SEARCH REPORT

International application No.

**PCT/CN2016/100835**

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI: increment, dig+, min+, hyperparameter, model?, set, chang+, updat+, threshold

### C. DOCUMENTS CONSIDERED TO BE RELEVANT

| Category* | Citation of document, with indication, where appropriate, of the relevant passages | Relevant to claim No. |
|---|---|---|
| A | CN 102591917 A (HUAWEI TECHNOLOGIES CO., LTD.), 18 July 2012 (18.07.2012), description, paragraphs [0006]-[0007] | 1-16 |
| A | CN 102117487 A (NANJING UNIVERSITY), 06 July 2011 (06.07.2011), the whole document | 1-16 |
| A | CN 103488705 A (UNIVERSITY OF ELECTRONIC SCIENCE AND TECHNOLOGY OF CHINA), 01 January 2014 (01.01.2014), the whole document | 1-16 |
| A | US 8271408 B2 (YAHOO! INC.), 18 September 2012 (18.09.2012), the whole document | 1-16 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 December 2016 (09.12.2016) | **28 December 2016 (28.12.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**HU, Lili**<br><br>Telephone No.: (86-10) **52745004** |

Form PCT/ISA/210 (second sheet) (July 2009)

## INTERNATIONAL SEARCH REPORT
### Information on patent family members

| | International application No. |
|---|---|
| | **PCT/CN2016/100835** |

| Patent Documents referred in the Report | Publication Date | Patent Family | Publication Date |
|---|---|---|---|
| CN 102591917 A | 18 July 2012 | WO 2013086834 A1 | 20 June 2013 |
| | | US 8527448 B2 | 03 September 2013 |
| CN 102117487 A | 06 July 2011 | None | |
| CN 103488705 A | 01 January 2014 | None | |
| US 8271408 B2 | 18 September 2012 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510824545